# FASCICULE DE BREVET EUROPEEN

(11) **EP 2 041 471 B1**
(45) Date de publication et mention de la délivrance du brevet: **15.09.2010**
(21) Numéro de dépôt: 07803798.3
(22) Date de dépôt: 28.06.2007
(51) Int. Cl.: F16L 37/098

(54) **RACCORD METALLIQUE A POSITION DE VERROUILLAGE**
METALLKUPPLUNG MIT SPERRPOSITION
METAL COUPLING WITH LOCKED POSITION

(30) Priorité: 17.07.2006 FR 0606465
(43) Date de publication de la demande: 01.04.2009
(73) Titulaire: LEGRIS SA, 35000 Rennes (FR)
(72) Inventeur: BLIVET, Philippe, 35200 Rennes (FR); PODER, Philippe, 35580 Guichen (FR)
(74) Mandataire: Lavialle, Bruno François Stéphane
(86) Numéro de dépôt international: PCT/FR2007/001089
(87) Numéro de publication internationale: WO 2008/009788

(56) Documents cités:
- EP-A1- 0 665 401
- DE-U1- 29 719 415
- DE-U1-202005 002 159

## Description

La présente invention concerne un raccord pour conduit, utilisable notamment dans les circuits de transport de fluide et plus particulièrement dans les circuits de carburant des véhicules automobiles, pour relier un organe émetteur de fluide et un organe récepteur de fluide tels que des canalisations, une pompe, un réservoir, un distributeur, un injecteur, un actionneur...

Les raccords connus sont réalisés soit en métal soit en matière plastique. Toutefois les raccords métalliques tendent désormais à se substituer aux raccords plastiques dans les circuits de carburant des véhicules automobiles du fait de leur résistance mécanique limitant le risque d'une fuite d'essence lors d'un accident. La conception de ces raccords métalliques est toutefois plus délicate de celles des raccords plastiques, le métal n'autorisant pas la liberté de formes qu'offre la matière plastique à un coût de fabrication compétitif.

Il est connu des raccords métalliques à connexion instantanée pour embout comportant une portion d'extrémité s'étendant au-delà d'un bourrelet, le raccord comportant un corps délimitant un logement agencé pour recevoir de façon étanche la portion d'extrémité de l'embout et pourvu intérieurement de moyens d'accrochage du bourrelet comportant des doigts inclinés se soulevant au passage du bourrelet lors de l'introduction de l'embout dans le logement et revenant élastiquement derrière le bourrelet après le passage de celui-ci pour s'opposer au retrait de l'embout en s'arc-boutant contre le bourrelet. La déconnexion de l'embout nécessite d'introduire entre la surface périphérique de l'embout et la paroi du logement un outil permettant de soulever les doigts pour permettre le passage du bourrelet. Or, dans certains circuits, il n'est pas possible de disposer d'un espace suffisant pour le passage de l'outil, empêchant ainsi l'utilisation de tels raccords.

Il existe par ailleurs des raccords métalliques à épingle pour embout comportant une portion d'extrémité s'étendant au-delà d'un bourrelet, le raccord comportant un corps délimitant un logement agencé pour recevoir de façon étanche la portion d'extrémité de l'embout et pourvu d'une ouverture latérale débouchant dans le logement pour permettre, après l'introduction de l'embout dans le logement, la mise en place d'une épingle derrière la collerette de l'embout. Il est nécessaire de prévoir, des moyens de retenue de l'épingle sur le corps afin d'empêcher un dégagement de l'épingle voire une perte de celle-ci.

En outre, d'une manière générale, les raccords métalliques présentent l'avantage d'être relativement lourds par rapport aux raccords plastiques obligeant les fabricants de raccords à limiter la quantité de métal employée sans sacrifier la robustesse de la connexion.

Un raccord selon le préambule de la revendication 1 est connu par le document EP-A-0 665 401.

Un but de l'invention est de proposer un raccord, pratique d'utilisation et relativement léger, assurant une connexion fiable et robuste et pouvant être réalisé au besoin en métal à un coût relativement modéré.

A cet effet, on prévoit, selon l'invention, un raccord pour conduit, le raccord comprenant un élément intérieur et un élément extérieur à savoir un corps et un manchon monté coaxialement sur le corps, le corps délimitant un logement débouchant sur une face du corps pour qu'une portion d'extrémité du conduit puisse y être introduite. Le manchon a une extrémité en saillie de cette face du corps et pourvue d'un redan d'accrochage du conduit et radialement et élastiquement déformable depuis un état de retenue du conduit vers un état de passage du conduit. Le manchon est monté sur le corps pour coulisser entre une première et une deuxième position successives par référence à un sens d'introduction du conduit dans le logement, le corps et le manchon comportant des reliefs complémentaires qui coopèrent ensemble lorsque le manchon est dans sa première position pour maintenir le manchon dans son état de retenue et qui sont dégagés l'un de l'autre lorsque le manchon est dans sa deuxième position.

Ainsi, la portion d'extrémité du conduit peut être introduite dans le logement lorsque le manchon est dans sa deuxième position où il est libre de se déformer vers son état de passage. Lorsqu'un effort d'extraction est exercé sur le conduit, le manchon, élastiquement rappelé dans son état de retenue, est entraîné vers sa première position par le conduit. La coopération des reliefs complémentaires va alors renforcer l'accrochage du tube par le redan en s'opposant à une déformation du manchon vers son état de passage.

De préférence, le raccord comporte, outre les reliefs complémentaires de maintien du manchon dans son état de retenue, des reliefs complémentaires qui coopèrent ensemble, lorsque le manchon est dans une troisième position située au-delà de la deuxième position, pour maintenir le manchon dans son état de passage et qui sont dégagés l'un de l'autre lorsque le manchon est dans sa deuxième position, les reliefs complémentaires de maintien du manchon dans l'état de passage ont des formes telles que la troisième position du manchon est une position instable.

L'introduction du conduit dans le logement est ainsi facilitée lorsque le manchon est dans sa troisième position. Après l'introduction de l'embout, le manchon revient spontanément en deuxième position du fait de l'instabilité de la troisième position, ce qui empêche qu'à la suite d'un oubli le manchon soit maintenu en état de passage après l'introduction de l'embout.

Selon un mode de réalisation particulier, les reliefs complémentaires comprennent une languette inclinée solidaire de l'un des éléments du raccord et reçue dans une ouverture qui est ménagée dans l'autre des éléments du raccord et qui possède un bord pour coopérer avec la languette et, de préférence, la languette possède une première face s'étendant en regard d'un premier bord de l'ouverture pour former les reliefs complémentaires de maintien du manchon dans son état de retenue et une deuxième face s'étendant en regard d'un deuxième bord de l'ouverture pour former les reliefs complémentaires de maintien du manchon dans l'état de passage.

Ce mode de réalisation est particulièrement simple.

Avantageusement, le manchon est fendu longitudinalement.

La fente longitudinale facilite la déformation du manchon et permet l'utilisation d'un matériau relativement raide.

De préférence alors, le raccord comporte une pièce de manoeuvre du manchon, la pièce de manoeuvre étant montée sur le manchon en regard de la fente longitudinale selon une première caractéristique et/ou la pièce de manoeuvre du manchon coopérant avec des bords de la fente longitudinale pour écarter ces bords l'un de l'autre lorsque la pièce de manoeuvre est tirée vers la troisième position du manchon selon une deuxième caractéristique.

La première caractéristique de la pièce de manoeuvre permet d'éviter qu'un opérateur ne se pince en manipulant le manchon. La deuxième caractéristique permet de faciliter la déformation du manchon lorsqu'un opérateur déplace le manchon vers sa troisième position.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue schématique en coupe longitudinale d'un raccord conforme à l'invention,
- la figure 2 est une vue du raccord analogue à celle de la figure 1 au cours de l'introduction d'un conduit,
- la figure 3 est une vue du raccord analogue à celle de la figure 1 après l'introduction du conduit,
- la figure 4 est une vue du raccord analogue à celle de la figure 1 lorsqu'un effort d'extraction est exercé sur le conduit,

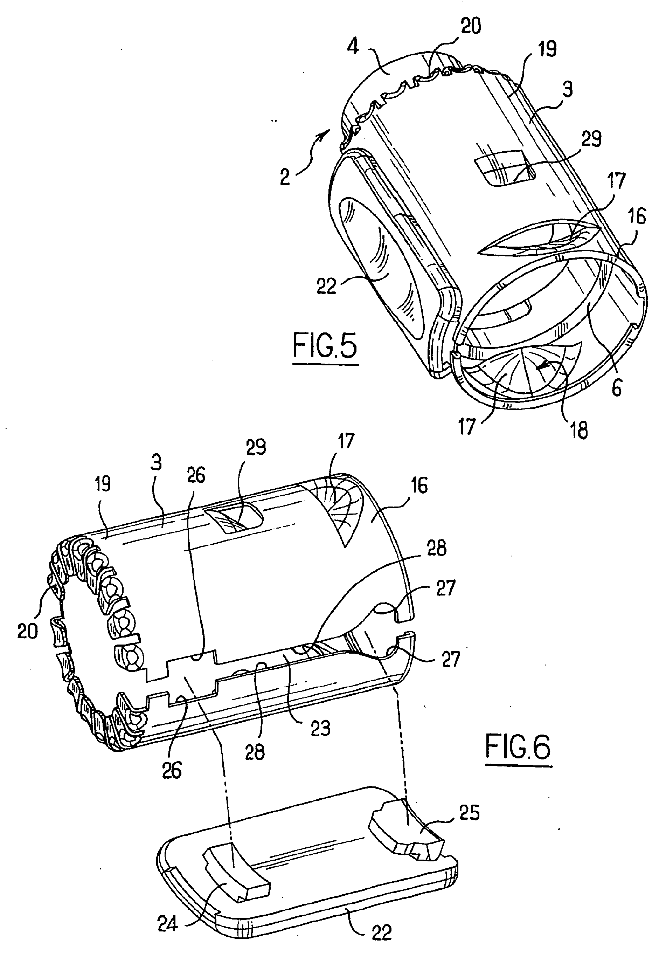

- la figure 5 est une vue en perspective du raccord,
- la figure 6 est une vue en perspective éclatée du manchon du raccord.

En référence aux figures, le raccord conforme à l'invention est destiné à relier un organe à un conduit d'un circuit de transport de fluide. L'organe et le conduit peuvent être émetteur ou récepteur de fluide. L'organe est par exemple une canalisation, une pompe, un réservoir, un distributeur, un actionneur, un injecteur... Le conduit, portant la référence générale 100 sur les figures, peut être d'une seule pièce avec un autre organe du circuit de transport de fluide ou être relié à celui-ci par des moyens connus en eux-mêmes. Le conduit 100 comporte une collerette 101 externe et une portion d'extrémité 102 s'étendant au-delà de la collerette 101.

Le raccord conforme à l'invention, généralement désigné en 1 comporte un corps 2 entouré d'un manchon 3 formant respectivement un élément intérieur et un élément extérieur en acier inoxydable. D'autres métaux sont bien entendu utilisables, de même que des matériaux thermoplastiques ou composites.

Le corps 2, réalisé par exemple par emboutissage ou thermoformage, est axialement divisé en une section de raccordement au conduit 100 et une section (non visible sur les figures) de liaison à l'organe auquel le conduit 100 doit être relié. La section de liaison à l'organe peut être identique à la section de raccordement au conduit 100 ou être en une seule pièce avec ledit organe, ou être pourvue de moyens de connexion instantanée (par rondelle déformable, verrou radial, pince...) ou non instantanée (notamment par épingle), de moyens de son ancrage dans un canal de l'organe (par exemple des reliefs en dents de sapin ou des bourrelets) ...

Le corps 2 comprend une paroi 4, tubulaire et étagée, délimitant, du côté de la section de raccordement au conduit 100, un logement 5 comportant un tronçon d'entrée 5.1 débouchant sur une face d'extrémité 6 de la paroi 4 et relié à un tronçon intermédiaire 5.2 lui-même relié à un tronçon terminal 5.3 destiné à être en communication avec l'organe auquel le conduit 100 doit être relié.

Le tronçon terminal 5.3 a un diamètre sensiblement égal au diamètre externe du tronçon d'extrémité 102. Le tronçon intermédiaire 5.2 a un diamètre supérieur à celui du tronçon terminal 5.3 et reçoit des joints d'étanchéité 7, 8 de diamètre interne inférieur au diamètre externe de la portion d'extrémité 102. Le tronçon intermédiaire 5.2 est relié par un épaulement 9 au tronçon terminal 5.3. Le tronçon d'entrée 5.1 a un diamètre supérieur au diamètre de la collerette 101 et au diamètre du tronçon intermédiaire 5.2 auquel il est relié par un épaulement 10, et accueille une douille de guidage 11 formée d'une tôle roulée en tore ayant une section en J, la révolution de la jambe du J formant une paroi interne 12 de la douille de guidage 11, de diamètre sensiblement égal au diamètre externe de la portion d'extrémité 102. La paroi interne 12 s'évase vers la face d'extrémité 6 pour faciliter l'introduction de la portion d'extrémité 102. La douille de guidage 11 est en appui contre l'épaulement 10 pour assurer la retenue des joints d'étanchéité 7, 8.

Entre la douille de guidage 11 et la face d'extrémité 6, la paroi 4 présente deux ouvertures 13 situées en regard l'une de l'autre. Chaque ouverture 13 comporte deux bords 14, 15 s'étendant parallèlement à des plans transversaux du corps 2, respectivement du côté de la face d'extrémité 6 et du côté de la douille de guidage 11.

Le manchon 3 , réalisé par exemple par roulage d'une tôle, possède une extrémité 16, en saillie axiale de la face d'extrémité 6, pourvue de redans d'accrochage 17 en saillie radiale vers l'intérieur. Les redans d'accrochage 17 sont formés de crevés réalisés dans le manchon 3 et présentent à l'opposé de la face d'extrémité 6 une face biseautée 18. A l'opposé de l'extrémité 16, le manchon 3 possède une extrémité 19 pourvue de redans de butée 20 destinés à coopérer avec un épaulement externe 21 du corps 2.

Des languettes 29 sont découpées dans le manchon 3.

Chaque languette 29 s'étend selon une direction axiale du manchon 3 et comprend, du côté de l'extrémité 19, une extrémité solidaire du manchon 3 et, du côté de l'extrémité 16, une extrémité en saillie vers l'intérieur du manchon 3 de sorte que chaque languette 29 soit inclinée et passe dans une des ouvertures 13. Chaque languette a ainsi une face 30 orientée vers le bord 14 et une face 31 orientée vers le bord 15.

Le manchon 3 est fendu longitudinalement et est déformable élastiquement entre un état de repos, dit état de retenue, dans lequel les redans d'accrochage 17 délimitent une section de passage de diamètre inférieur au diamètre de la collerette 101 et un état déformé, dit état de passage, dans lequel les redans d'accrochage 17 délimitent une section de passage de diamètre supérieur au diamètre de la collerette 101.

Une pièce de manoeuvre 22 est montée sur le manchon 3 de manière qu'elle s'étende en regard de la fente 23 et qu'elle masque celle-ci. La pièce de manoeuvre 22 comprend deux plots 24, 25 qui sont reçus dans des encoches 26, 27 ménagées dans chaque bord 28 de la fente 23 respectivement du côté de l'extrémité 19 et du côté de l'extrémité 16. Les plots 24, 25 assurent la retenue de la pièce de manoeuvre 22 sur le manchon 3. Les encoches 26 sont de forme rectangulaire tandis que les encoches 27 ont une forme sensiblement en demi as de pique, le bord de chaque encoche 27 comportant un tronçon convergeant progressivement vers le bord 28 en direction des encoches 26. Les encoches 26 ont une longueur supérieure à celle du plot 24. Ainsi, lorsque la pièce de manoeuvre 22 est déplacée vers l'extrémité 19 du manchon 3, le plot 25 est introduit entre les tronçons convergents des encoches 27 et tend à déformer le manchon 3 dans son état de passage.

Le manchon 3 est monté sur le corps 2 pour être mobile entre une première et une troisième position situées de part et d'autre d'une deuxième position et successives par référence à un sens d'introduction 104 du conduit 100 dans le logement 5.

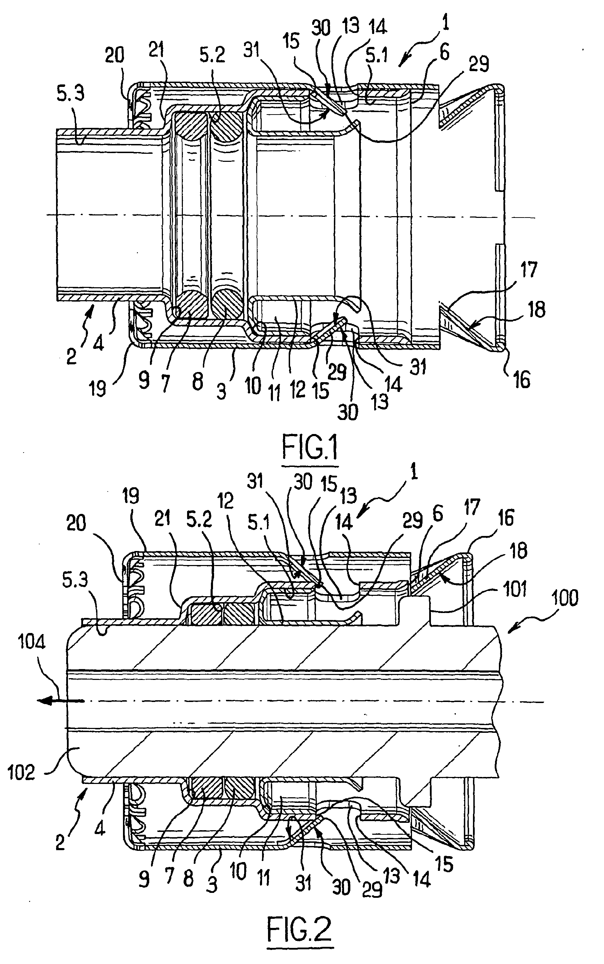

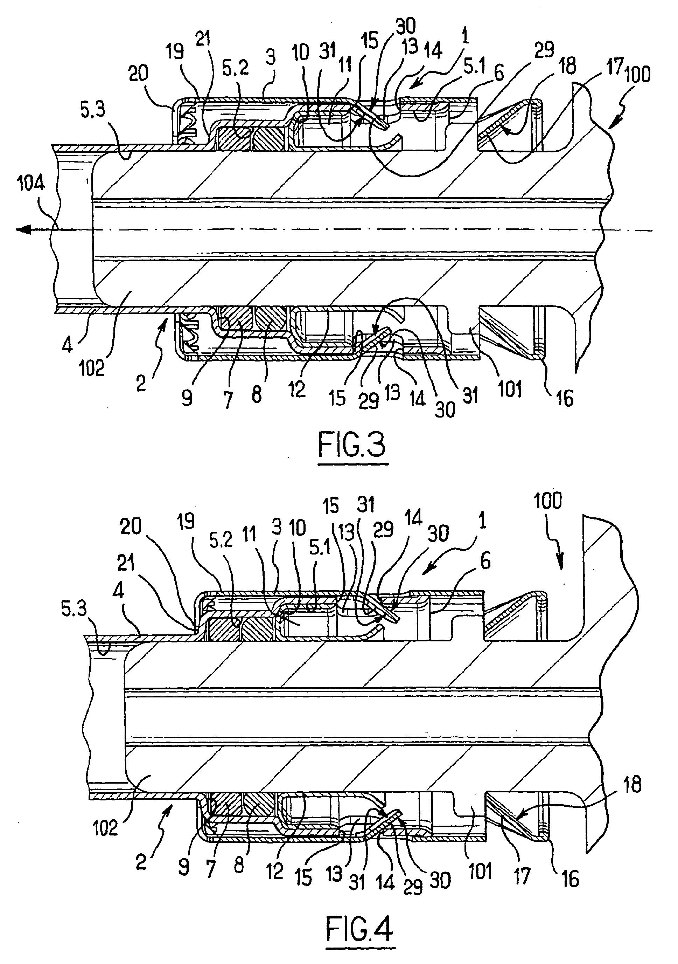

La deuxième position (représentée aux figures 1 et 3) est une position neutre dans laquelle le manchon 3 est libre de se déformer entre son état de retenue et son état de passage. Les languettes 29 sont dégagées des bords 14, 15.

La connexion du conduit est généralement réalisée alors que le manchon est dans cette position. La collerette 101 rencontre la face biseautée 18 des redans d'accrochage 17 et va glisser sur celles-ci qui vont former des cames de déformation du manchon 3 vers son état de passage (voir la figure 2). En outre, sous l'effort d'introduction du conduit 100, le manchon 3 tend à reculer vers sa troisième position de sorte que la face 31 de chaque languette 29 va glisser sur le bord 15 de l'ouverture 13 correspondante et va elle aussi former une came de déformation du manchon 3, les languettes 29 et les bords 15 formant des reliefs complémentaires. La déformation du manchon 3 dans son état de passage permet à la collerette 101 de passer les redans d'accrochage 17. L'introduction de la portion d'extrémité 102 du conduit 100 dans le logement 5 est interrompue lorsque la collerette 101 arrive en butée contre la paroi interne 12 de la douille de guidage 11. Dès que la collerette 101 dépasse les redans d'accrochage 17, le manchon 3 revient élastiquement dans son état de retenue, les redans d'accrochage 17 s'opposant à l'extraction du conduit 100 en prenant appui derrière la collerette 101. On notera que la paroi interne 12 s'étend en saillie axiale des extrémités libres des languettes 29 lorsque le manchon 3 est dans sa deuxième position de sorte qu'un effort d'enfoncement exercé sur le conduit 100 ne peut déplacer le conduit 100 dans le logement 5 et ne peut entraîner aucune interférence du conduit 100 avec les languettes 29.

Lorsque le circuit dans lequel sont implantés le conduit 100 et le raccord 1 est mis sous pression, ou lorsqu'un effort d'extraction est exercé sur le conduit 100, le conduit 100 recule par rapport au corps 2 et entraîne le manchon 3 vers sa première position ou position de verrouillage (voir la figure 4). L'extrémité libre de chaque languette passe alors sous le bord 14 de l'ouverture 13 correspondante et la face 30 de chaque languette 29 vient au contact de ce bord 14 pour former une came de maintien du manchon 3 dans son état de retenue et renforcer l'accrochage de la collerette du conduit 100. Les languettes 29 et les bords 14 forment des reliefs complémentaires. Les redans de butées 20 sont en appui contre l'épaulement 21 et s'opposent à une extraction du manchon 3.

Pour déconnecter le conduit 100 du raccord 1, l'opérateur amène le manchon 3 dans sa troisième position ou position de déconnexion en saisissant la pièce de manoeuvre 22. La pièce de manoeuvre 22 est ainsi déplacée vers l'extrémité 19 du manchon 3, le plot 25 est introduit entre les tronçons convergents des encoches 27 et tend à écarter les bords 28 de la fente 23 et donc à déformer le manchon 3 dans son état de passage. Le plot 24 arrive en butée contre l'encoche 26 et entraîne le manchon 3 vers sa troisième position. La face 31 de chaque languette 29 va alors glisser sur le bord 15 de l'ouverture 13 correspondante et va elle aussi former une came de déformation du manchon 3. Le manchon 3 dans son état de passage permet l'extraction du conduit 100 hors du logement 5. On notera que l'élasticité du manchon 3 tend à ramener celui-ci dans son état de retenue et donc vers sa deuxième position. La troisième position est donc une position instable, l'inclinaison des languettes 29 favorisant ce retour vers la deuxième position.

Bien entendu, l'invention n'est pas limitée au mode de réalisation décrit mais englobe toute variante entrant dans le cadre de l'invention telle que définie par les revendications.

En particulier, les redans d'accrochage 17 peuvent être formés de pattes recourbées. Le nombre de redans peut être différent de celui du mode de réalisation décrit, de même que pour le nombre de languettes et d'ouvertures.

La possibilité d'une déconnexion est facultative.

La pièce de manoeuvre peut être omise ou agencée pour ne constituer qu'un moyen de masquer la fente.

L'invention est utilisable avec des conduits sans collerette ou avec un autre type de relief.

En outre on pourrait prévoir deux languettes axialement successives, une pour le maintien en position de retenue et une pour la déformation, ou d'autres formes comme des dents de scie.

Il est également possible de réaliser un raccord conforme à l'invention par inversion cinématique du raccord décrit.

## Revendications

1. Raccord (1) pour conduit (100), le raccord comprenant un élément intérieur et un élément extérieur à savoir un corps (2) et un manchon (3) monté coaxialement sur le corps, le corps délimitant un logement (5) débouchant sur une face (6) du corps pour qu'une portion d'extrémité (102) du conduit puisse y être introduite, le manchon ayant une extrémité en saillie de cette face du corps et pourvue d'un redan d'accrochage (17) du conduit, le manchon étant radialement et élastiquement déformable depuis un état de retenue de l'embout vers un état de passage du conduit, le manchon étant monté sur le corps pour coulisser entre une première et une deuxième position successives par référence à un sens d'introduction (104) du conduit dans le logement, **caractérisé en ce que** le corps et le manchon comportent des reliefs complémentaires (29, 14) qui coopèrent ensemble lorsque le manchon est dans sa première position pour maintenir le manchon dans son état de retenue et qui sont dégagés l'un de l'autre lorsque le manchon est dans sa deuxième position.

2. Raccord (1) selon la revendication 1, comportant, outre les reliefs complémentaires (29,14) de maintien du manchon (3) dans son état de retenue, des reliefs complémentaires (29,15) qui coopérent ensemble, lorsque le manchon est dans une troisième position située au-delà de la deuxième position, pour maintenir le manchon dans son état de passage et qui sont dégagés l'un de l'autre lorsque le manchon est dans sa deuxième position.

3. Raccord (1) selon la revendication 2, dans lequel les reliefs complémentaires (29, 15) de maintien du manchon (3) dans l'état de passage ont des formes telles que la troisième position du manchon (3) est une position instable.

4. Raccord (1) selon l'une quelconque des revendications 1 à 3, dans lequel les reliefs complémentaires (29, 14, 15) comprennent une languette (29) inclinée solidaire de l'un (3) des éléments du raccord et reçue dans une ouverture (13) qui est ménagée dans l'autre (2) des éléments du raccord et qui possède un bord (14, 15) pour coopérer avec la languette.

5. Raccord (1) selon la revendication 4 prise en dépendance de la revendication 2, dans lequel la languette (29) possède une première face (30) s'étendant en regard d'un premier bord (14) de l'ouverture (13) pour former les reliefs complémentaires de maintien du manchon (3) dans son état de retenue et une deuxième face (31) s'étendant en regard d'un deuxième bord (15) de l'ouverture pour former les reliefs complémentaires de maintien du manchon dans l'état de passage.

6. Raccord (1) selon l'une quelconque des revendications 1 à 5, dans lequel le manchon (3) est fendu longitudinalement.

7. Raccord (1) selon la revendication 6, comportant une pièce de manoeuvre (22) du manchon (3) montée sur le manchon en regard de la fente longitudinale (23).

8. Raccord (1) selon la revendication 6 prise en dépendance de la revendication 2, comportant une pièce de manoeuvre (22) du manchon (3) coopérant avec des bords (28) de la fente longitudinale (23) pour écarter ces bords l'un de l'autre lorsque la pièce de manoeuvre est tirée vers la troisième position du manchon.

9. Raccord (1) selon la revendication 1, comportant une douille de guidage (11) de la portion d'extrémité (102) du conduit (100), la douille de guidage étant montée dans le logement et formée d'une tôle roulée en un tore de section en J.

10. Raccord (1) selon la revendication 9, dans lequel le redan d'accrochage (17) est formé d'un crevé ménagé dans le manchon (3).

11. Raccord (1) selon la revendication 9, dans lequel le manchon (3) possède, à l'opposé du redan d'accrochage (17), une extrémité pourvue d'au moins une patte recourbée (20) pour former un relief d'ancrage du manchon sur le corps (2).

12. Raccord (1) selon la revendication 1, dans lequel le redan d'accrochage (17) a une surface frontale inclinée (18)de manière à favoriser la déformation du manchon (3)vers son état de passage lors de l'introduction du conduit.

13. Raccord selon la revendication 1, dans lequel, la portion d'extrémité (102) du conduit (100) s'étendant au-delà d'un relief (101), le redan d'accrochage (17) est agencé pour retenir ce relief.

## Claims

1. A coupling (1) for a duct (100), the coupling comprising an inner element and an outer element, namely a body (2) and a sleeve (3) mounted coaxially on the body, the body defining a housing (5) opening out in a face (6) of the body to enable an end portion (102) of the duct to be inserted therein, the coupling being the sleeve having an end projecting from said face of the body and provided with a catch step (17) for catching the duct, the sleeve being deformable radially and elastically from an endpiece-retaining state to an endpiece-passing state, the sleeve being mounted on the body to slide between first and second successive positions relative to an insertion direction (104) for inserting the duct into the housing, **characterized in that** the body and the sleeve include complementary portions in relief (29, 14) that co-operate together when the sleeve is in its first position to hold the sleeve in its retaining state, and that are disengaged from each another when the sleeve is in its second position.

2. A coupling (1) according to claim 1, including, in addition to the complementary portions in relief (29, 14) for holding the sleeve (3) in its retaining state, complementary portions in relief (29, 15) that co-operate together when the sleeve is in a third position situated beyond the second position, to hold the sleeve in its passing state and that are disengaged from each other when the sleeve is in its second position.

3. A coupling (1) according to claim 2, wherein the complementary portions in relief (29, 15) for holding the sleeve (3) in the passing state are of shapes such that the third position of the sleeve (3) is an unstable position.

4. A coupling (1) according to any one of claims 1 to 3, wherein the complementary portions in relief (29, 14, 15) comprise an inclined tongue (29) secured to one of the elements (3) of the coupling and received in an opening (13) formed in the other element (2) of the coupling, and possessing an edge (14, 15) for co-operating with the tongue.

5. A coupling (1) according to claim 4 as dependent on claim 2, wherein the tongue (29) possesses a first face (30) facing a first edge (14) of the opening (13) to form the complementary portions in relief for holding the sleeve (3) in its retaining state, and a second face (31) facing a second edge (15) of the opening to form the complementary portions in relief for holding the sleeve in the passing state.

6. A coupling (1) according to any one of claims 1 to 5, wherein the sleeve (3) is split by a longitudinal slot.

7. A coupling (1) according to claim 6, including a drive piece (22) for driving the sleeve (3) and mounted on the sleeve in register with the longitudinal slot (23).

8. A coupling (1) according to claim 6 as dependent on claim 2, the coupling including a drive piece (22) for the sleeve (3) that co-operates with edges (28) of the longitudinal slot (23) to move these edges apart from each other when the drive part is pulled towards the third position of the sleeve.

9. A coupling (1) according to claim 1, including a guide bushing (11) for guiding the end portion (102) of the duct (100), the guide bushing being mounted in the housing and being formed by a metal sheet rolled into a torus of J-shaped section.

10. A coupling (1) according to claim 9, wherein the catch step (17) is formed by a plunged boss formed in the sleeve (3).

11. A coupling (1) according to claim 9, wherein the sleeve (3) possesses an end remote from the catch step (17), which end is provided with at least one curved tab (20) to form a portion in relief for anchoring the sleeve of the body (2).

12. A coupling (1) according to claim 1, wherein the catch step (17) has a front surface (18) sloping in such a manner as to encourage the sleeve (3) to deform towards its passing state during insertion of the duct.

13. A coupling (1) according to claim 1, wherein the end portion (102) of the duct (100) extends beyond a portion in relief (101), and the catch step (17) is arranged to retain said portion in relief.

## Patentansprüche

1. Verbindungsstück (1) für eine Leitung (100), wobei das Verbindungsstück ein Innenelement und ein Außenelement umfasst, nämlich einen Körper (2) und eine Hülse (3), die koaxial auf dem Körper montiert ist, wobei der Körper eine Aufnahme (5) begrenzt, die auf einer Seite (6) des Körpers mündet, damit ein Endabschnitt (102) der Leitung dort eingeführt werden kann, wobei die Hülse ein an dieser Seite des Körpers über diesen vorstehendes Ende hat, das mit einem Verankerungsvorsprung (17) zur Verankerung der Leitung versehen ist, wobei die Hülse von einem Sperrzustand zum Halten des Ansatzstückes in einen Durchlasszustand zum Durchlassen der Leitung radial und elastisch verformbar ist, und wobei die Hülse derart an dem Körper gelagert ist, dass sie sich zwischen einer ersten und einer zweiten Position verschieben kann, die in Bezug auf eine Einführrichtung (104) der Leitung in die Aufnahme aufeinander folgen, **dadurch gekennzeichnet, dass** der Körper und die Hülse komplementäre Reliefelemente (29, 14) umfassen, die zusammenwirken, wenn die Hülse in ihrer ersten Position ist, um die Hülse in ihrem Sperrzustand zu halten, und die außer Eingriff stehen, wenn die Hülse in ihrer zweiten Position ist.

2. Verbindungsstück (1) nach Anspruch 1, das außer den komplementären Reliefelementen (29, 14) zum Halten der Hülse (3) in ihrem Sperrzustand komplementäre Reliefelemente (29, 15) umfasst, die zusammenwirken, wenn die Hülse in einer dritten Position ist, die sich jenseits der zweiten Position befindet, um die Hülse in ihrem Durchlasszustand zu halten, und die außer Eingriff stehen, wenn die Hülse in ihrer zweiten Position ist.

3. Verbindungsstück (1) nach Anspruch 2, wobei die komplementären Reliefelemente (29, 15) zum Halten der Hülse (3) in dem Durchlasszustand solche Formen haben, dass die dritte Position der Hülse (3) eine instabile Position ist.

4. Verbindungsstück (1) nach einem der Ansprüche 1 bis 3, wobei die komplementären Reliefelemente (29, 14, 15) eine schräg gestellte Zunge (29) umfassen, die fest mit einem (3) der Elemente des Verbindungsstücks verbunden und in einer Öffnung (13) aufgenommen ist, die in dem anderen (2) der Elemente des Verbindungsstücks ausgebildet ist und einen Rand (14, 15) hat, der dazu bestimmt ist, mit der Zunge zusammenzuwirken.

5. Verbindungsstück (1) nach Anspruch 4, in Abhängigkeit von Anspruch 2, wobei die Zunge (29) eine erste Seite (30) hat, die sich gegenüber einem ersten Rand (14) der Öffnung (13) erstreckt, um die komplementären Reliefelemente zum Halten der Hülse (3) in ihrem Sperrzustand zu bilden, sowie eine zweite Seite (31), die sich gegenüber einem zweiten Rand (15) der Öffnung erstreckt, um die komplementären Reliefelemente zum Halten der Hülse in ihrem Durchlasszustand zu bilden.

6. Verbindungsstück (1) nach einem der Ansprüche 1 bis 5, wobei die Hülse (3) in Längsrichtung geschlitzt ist.

7. Verbindungsstück (1) nach Anspruch 6, umfassend ein Betätigungsteil (22) zum Betätigen der Hülse (3), das auf die Hülse im Bereich des Längsschlitzes (23) montiert ist.

8. Verbindungsstück (1) nach Anspruch 6, in Abhängigkeit von Anspruch 2, umfassend ein Betätigungsteil (22) zum Betätigen der Hülse (3), das mit Rändern (28) des Längsschlitzes (23) zusammenwirkt, um diese Ränder auseinanderzuspreizen, wenn das Betätigungsteil in Richtung der dritten Position der Hülse gezogen wird.

9. Verbindungsstück (1) nach Anspruch 1, umfassend einen Führungszapfen (11) zum Führen des Endabschnittes (102) der Leitung (100), wobei der Führungszapfen in der Aufnahme gelagert und aus einem Blech gebildet ist, das zu einer Wulst mit J-förmigem Querschnitt gerollt ist.

10. Verbindungsstück (1) nach Anspruch 9, wobei der Verankerungsvorsprung (17) aus einem Einschnitt gebildet ist, der in der Hülse (3) ausgebildet ist.

11. Verbindungsstück (1) nach Anspruch 9, wobei die Hülse (3) entgegengesetzt zu dem Verankerungsvorsprung (17) ein Ende hat, das mit mindestens einer gebogenen Lasche (20) versehen ist, die dazu bestimmt ist, ein Verankerungsreliefelement zum Verankern der Hülse an dem Körper (2) zu bilden.

12. Verbindungsstück (1) nach Anspruch 1, wobei der Verankerungsvorsprung (17) eine Vorderfläche (18) hat, die derart schräg gestellt ist, dass sie die Verformung der Hülse (3) in Richtung ihres Durchlasszustandes während des Einführens der Leitung begünstigt.

13. Verbindungsstück nach Anspruch 1, wobei sich der Endabschnitt (102) der Leitung (100) jenseits eines Reliefelements (101) erstreckt, wobei der Verankerungsvorsprung (17) derart ausgebildet ist, dass er dieses Reliefelement zurückhält.
